# EUROPEAN PATENT APPLICATION

(11) **EP 1 607 972 A2**
(43) Date of publication of application: **21.12.2005**
(21) Application number: 05252896.5
(22) Date of filing: 11.05.2005
(51) Int. Cl.: G11B 20/18

(54) **Apparatus, medium, and method for compensating for a defect on a medium based on a corresponding area being a recorded area or an unrecorded area**

(30) Priority: 15.06.2004 KR 2004043919
(71) Applicant: SAMSUNG ELECTRONICS CO., LTD., Suwon-si, Gyeonggi-do (KR)
(72) Inventor: Kim, Min-seok, Mapo-gu Seoul (KR); Ahn, Yong-jin, Seocho-gu Seoul (KR); Kang, Kyung-pil, Gwanak-gu Seoul (KR)
(74) Representative: Waddington, Richard

(57) **Abstract**

An apparatus, medium, and method for compensating for a defect, based on a discrimination of whether the defect is in a recorded or unrecorded area in an optical recording medium. A method for compensating for the defect includes at least operations of referring to a predetermined information area of a loaded disk to determine a disk state, referring to a predetermined area having a recording information to determine a positional information with respect to recorded areas and unrecorded areas, and storing the positional information, when it is determined that the disk has data stored therein, identifying a position where a defect is detected, referring to the positional information when the defect is detected while data is recorded and reproduced, and determining which of recorded or unrecorded areas corresponds to the position where the defect is detected, and carrying out a predetermined method for compensating the defect suitable for the corresponding area.

## Description

The present invention relates to an apparatus, medium, and method for compensating for defects on a recording medium based on a corresponding area being a recorded area or an unrecorded area, wherein recorded areas and unrecorded areas are discriminated before recording/reproducing to/from the recording medium, with respective different defect compensations being applied to the recorded areas and the unrecorded.

Recording and reproducing information to/from a recording medium (hereafter, referred to as a disk, e.g., an optical disk) uses a laser to record or read information from the disk based on an observed amount of change in reflective light of laser beams with respect to the disk.

Methods for recording data onto the disk, by adjusting the reflective light, include: one for employing an interference between a reference plane and a pit by forming the concave pit on the disk substrate, such as a typical Compact Disk (CD); a Digital Video Disk (DVD), one for adjusting a polarizing direction of a magneto-optical recording medium, such as a magneto-optical disk; one for employing an amount of reflective lights based on a state of the recording medium, such as a phase change CD-ReWritable disk (CD-RW); and one for deforming organic pigments, such as CD-Recordable (CD-R). These methods may include a reproduction dedicated type (a typical CD), a single record dedicated type (a CD-R), and a repeatable record and reproduction dedicated type (CD-RW) based on a recording possibility and corresponding number of recordings. The repeatable record and reproduction dedicated type disk such as the CD-RW enables a user to repeatedly record information on the disk at least one time.

A corresponding optical disk drive employs a pick-up for reading out data recorded on the disk or for recording data onto the disk, as mentioned above. While the data recorded on the disk is read out by the pick-up, irregular signals other than normal data reproduction signals may be detected, with the irregular signals being due to defects with the disk, such as a finger print, a scratch, and a black dot, or the disk being bent or deformed.

Among these defects, one that causes the information recording surface of the disk to be inclined, e.g., due to the disk being bent or deformed, is referred to below merely as a defect. When no defects occur in the mounted disk, a laser source generated from the pick-up is almost vertically aligned with the information recording surface of the disk. However, when there exists a defect in the disk, laser formed spots, e.g., pits, on the information recording surface of the disk become deformed from their intended formation, which results in a reduced potential amount of irradiation light per unit area from the information recording surface of the disk. As a result, the size of the pit becomes decreased, thereby causing jitters when reproducing information from the disk.

In the above-mentioned optical recording and reproducing apparatus, conventional methods for compensating these defects are classified mainly into two types.

One method of compensating for the defect is to employ an absolute position of the pickup. More specifically, the position of the pickup is moved in a radial direction when the disk is loaded, while lights are irradiated onto respective predetermined positions of the disk to measure the intensity of the reflective lights to thereby calculate respective distances. The calculated distance is then used when the pickup reaches the predetermined positions to thereby compensate the defect.

The other method is to employ the jitter. This method compensates for the defect of the disk by reproducing the recording medium and measuring an amount of the jitter. That is, after the amount of the jitter is detected, while the recorded area is reproduced, it can be compared with a threshold amount of jitter, such that defect compensation will not be carried out when the jitter is less than the threshold amount and will be carried out when the jitter exceeds the threshold amount.

However, in these conventional methods, all of both the recorded areas and unrecorded areas are treated equally when compensating for a defect, or defect compensation is possible only in the recorded areas.
An aim of the invention is to address at least the above problems and/or disadvantages and to provide at least the advantages described below. Accordingly, the present invention provides a method for compensating for the defects based on discriminating between recorded areas and unrecorded areas in the optical recording and reproducing apparatus, wherein the recorded and unrecorded areas of the recording medium are discriminated in advance, and respective different defect compensation operations are carried out with respect to the recorded and unrecorded areas based on discrimination to implement more accurate defect compensation.

According to the present invention there is provided an apparatus and method as set forth in the appended claims. Preferred features of the invention will be apparent from the dependent claims, and the description which follows.

Additional aspects and/or advantages of the invention will be set forth in part in the description which follows and, in part, will be obvious from the description, or may be learned by practice of the invention.

According to an aspect of the present invention there is provided a method for compensating for a defect in a medium, determining a medium recording state by referring to a predetermined information area of the medium, including determining positional information of recorded and unrecorded areas of the medium by referring to a predetermined area of the medium and storing the positional information, based on the determination that the medium includes recorded data, identifying a position of the medium where a defect is detected, by referring to the stored positional information upon the defect being detected and while data is being recorded and/or reproduced to/from the identified position, and determining whether the identified position is in a recorded area or unrecorded area based on the referenced stored positional information, and carrying out a corresponding predetermined method for compensating for the defect based on the determination of whether the identified area is a recorded or unrecorded.

The predetermined information area may be an R-information area when the medium is a DVD-R or DVD-RW medium, and a lead-in area when the medium is a DVD-RAM medium. Further, the predetermined area having the recording information may be a recording management area (RMA) when the medium is a DVD-R or DVD-RW medium, and a predetermined drive test zone (DTZ) includes the recording information when the medium is a DVD-RAM medium.

The determining of whether the identified position is a recorded area or unrecorded area may be based on the positional information, and performed directly before the corresponding recording and/or reproducing operation to/from the medium is performed.

According to another aspect of the present invention there is provided an apparatus for compensating for a defect of a medium, including a memory having respective defect compensation programs suitable for recorded areas and unrecorded areas, a medium state determining unit to refer to a predetermined information area of the medium and determining a recording state of the medium, a positional information determining unit to refer to a predetermined area of the medium, having recording information, and identifying positional information for recorded and unrecorded areas of the medium, and to store the positional information in the memory, when the medium state determining unit determines the medium includes recorded data, a defect detection unit to identify a defect position when the defect is detected while data is recorded and/or reproduced to/from the medium, and a controller to determine whether the defect position is a recorded area or an unrecorded area, by referring to the positional information, and to carry out a predetermined method for compensating for the defect, based on the determination of whether the identified defect position is in a recorded or unrecorded area.

According to another aspect of the present invention there is provided a method for compensating for a defect in a medium, including identifying a position of a medium where a defect is detected and determining whether the identified position is in a recorded area or unrecorded area based on stored recording/unrecorded positional information for the medium, and carrying out a predetermined recording area compensating method when the defect position is in a recording area and a predetermined unrecorded area compensating method when the defect position is in an unrecorded area.

The defect may be an inclination of the medium relative to a pickup laser.

According to another aspect of the present invention there is provided a recording and/or reproducing method, including performing a defect compensating method according to embodiments of the present invention, and irradiating a surface of a medium for recording and/or reproducing to/from the medium.

The method may further include determining a recording state of the medium before the identifying of the position of the medium where the defect is detected, to determine whether data is recorded on the medium, by referring to an R-information area when the medium is a DVD-R or DVD-RW medium, and a lead-in area when the medium is a DVD-RAM medium. Similarly, the stored recording/unrecorded positional information may be stored in a recording management area (RMA) when the medium is a DVD-R or DVD-RW medium, and a predetermined drive test zone (DTZ) includes the recording information when the medium is a DVD-RAM medium.

According to another aspect of the present invention there is provided a recording and/or reproducing apparatus, a defect detection unit to identify a position of a medium where a defect is detected and to determine whether the identified position is in a recorded area or unrecorded area based on stored recording/unrecorded positional information for the medium, and a controller performing recording and/or reproducing to/from the medium by first carrying out a predetermined recording area compensating method when the defect position is in a recording area and a predetermined unrecorded area compensating method when the defect position is in an unrecorded area.

According to another aspect of the present invention there is provided a medium comprising computer readable code controlling a recording and/or reproducing apparatus to perform embodiments of the present invention.

For a better understanding of the invention, and to show how embodiments of the same may be carried into effect, reference will now be made, by way of example, to the accompanying diagrammatic drawings in which:
FIG. 1 is a block diagram showing a configuration of a general optical recording and reproducing apparatus;
FIG. 2 is a configuration diagram of a defect compensation device based on recorded and unrecorded areas, in an optical recording and reproducing apparatus, according to an embodiment of the present invention; and
FIG. 3 is a flowchart explaining a method for compensating for a defect based on a discrimination of recorded and unrecorded areas in an optical recording and reproducing apparatus, according to another embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

The matters defined in the description, such as the detailed construction and elements, are merely provided to assist in a comprehensive understanding of the invention. Thus, it is apparent that embodiments of the present invention can be carried out without those defined matters. Also, well-known functions or constructions are not described in detail since they would obscure the invention in unnecessary detail.

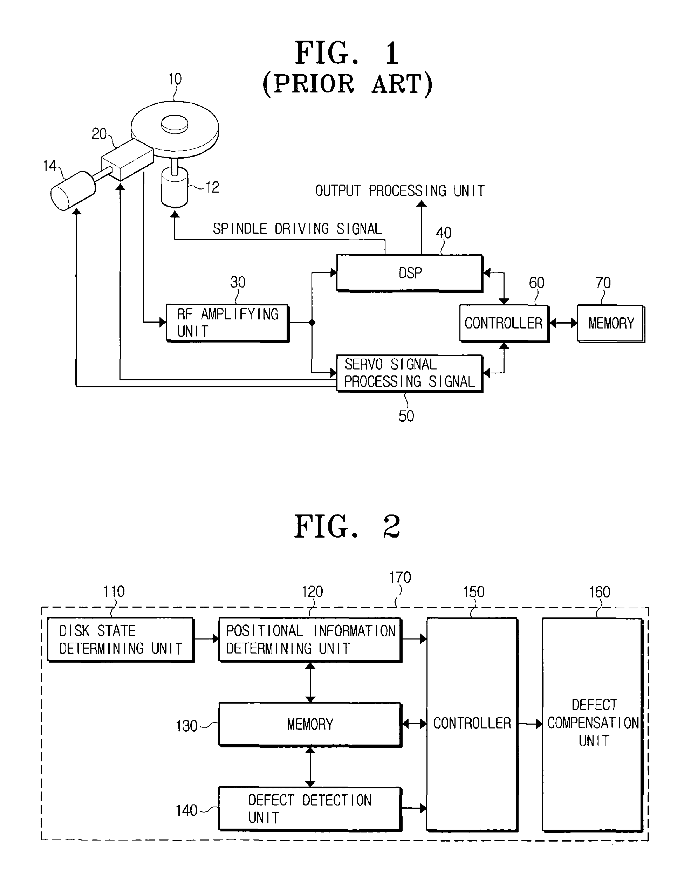

FIG. 1 is a block diagram showing a configuration of a general optical recording and reproducing apparatus. Referring to FIG. 1, a pickup 20 reads out an optical signal from a disk 10 that has stored data, and converts it to an electrical signal, such as a radio frequency (RF) signal to output it to an RF amplifying unit 30.

This pickup 20 is driven by a focus actuator for focus servo and by a tracking actuator for tracking servo. The tracking servo operates to permit the pickup 20 to follow the tracks on the disk 10, and the focus servo operates to maintain the pickup 20, with respect to the disk 10, in a focused on state.

The focusing actuator moves an object lens in an optical axis direction (i.e., vertical direction), in response to a control of the servo signal processing unit 50, and the tracking actuator moves the disk 10 in a radial direction of the object lens to track a track, also in response to the control of the servo signal processing unit 50.

The spindle motor 12 is driven by the spindle driving signal, input from the DSP 40, to rotate the disk 10 in a constant angular velocity (CAV) manner or constant linear velocity (CLV) manner. The Sled Feed Motor 14 is driven by the sled feed servo control of the servo signal processing unit 50 to move the pickup 20 in a reflective direction on the disk 10.

The RF amplifying unit 30 amplifies signals picked up by the pickup 20, removes noises and distortions of the amplified signals by use of an equalizing circuit, and transmits the waveform shaped signals to the DSP 40.

The DSP 40 demodulates data from Eight to Fourteen Modulation (EFM) signals transmitted from the RF amplifying unit 30, and performs error correction on the signals to be output to the output processing unit. The output processing unit processes data output from the DSP 40 to generate final output signals, such as video signals.

In the meantime, the memory 70 has a ROM in which a program for controlling general control of equipment is stored and a RAM for temporarily storing data to be generated when a control operation is performed, and the controller 60 performs general control for the equipment.

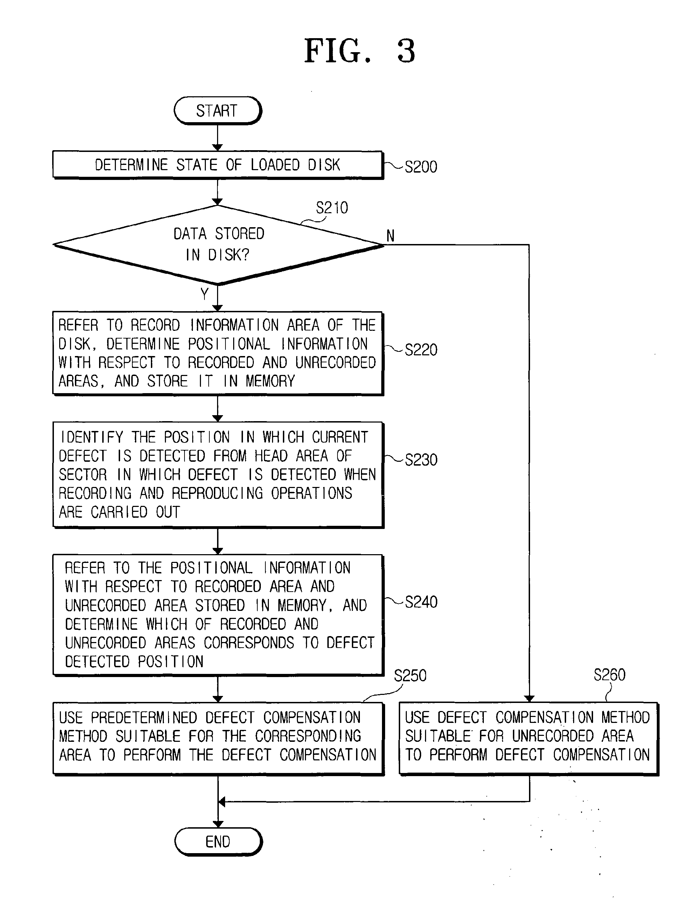

FIG. 2 is a configuration diagram of a defect compensation device based on recorded and unrecorded areas in an optical recording and reproducing apparatus, according to an embodiment of the present invention. Referring to FIG. 2, the defect compensation device includes a disk state determining unit 110, a positional information determining unit 120, a memory 130, a defect detection unit 140, a controller 150, and a defect compensation unit 160.

The disk state determining unit 110 refers to a predetermined information area of the disk read out from the pickup, illustrated in FIG. 1, and determines the state of the loaded disk. The disk state determination indicates whether data is stored in the disk.

When the disk is a recording medium with stored data, the positional information determining unit 120 refers to a predetermined area having record information (hereinafter, referred to as a 'record information area') and identifies positional information with respect to the recorded and unrecorded areas, and stores the positional information in the memory 130.

The memory 130 has a read-only memory (ROM) storing a predetermined defect compensation program suitable for the recorded area, a predetermined defect compensation program suitable for the unrecorded area, and a program for controlling general control of the equipment. The memory 130 also has a random-access memory (RAM) for temporarily storing data generated when control operations are performed.

When a defect is detected in a predetermined position, while data is being recorded and reproduced, the defect detection unit 140 identifies the position where the current defect has been detected, from a header area of the corresponding detected sector.

The controller 150 refers to the positional information, with respect to the recorded and unrecorded areas stored in the memory 130, and determines whether defect detected position is in a recorded area or an unrecorded area. Based on this determination, the controller controls the defect compensation unit 160 to perform defect compensation suitable for the corresponding area. The defect compensation unit 160 then performs defect compensation under control of the controller 150.

FIG. 3 is a flowchart explaining a method for compensating for a defect, based on a discrimination of recorded and unrecorded areas in the optical recording, and a reproducing apparatus, according to an embodiment of the present invention.

Referring to the flowchart, when the recording medium, such as the disk, is first loaded, the pickup reads out from a predetermined information area of the disk and provides the read information to the disk state determining unit 110. As a result, the disk state determining unit 110 determines the state of the loaded disk (S200). In this case, for example, the predetermined information area may be an R-information area in the DVD-R/RW, and a Lead-in area in the DVD-RAM.

When it is determined that the disk has data stored thereon, in operation 200, the positional information determining unit 120 refers to the record information area of the disk before recording and reproducing operations are performed, identifies the positional information for the recorded areas and the unrecorded areas, and stores the positional information in the memory 130 (S220).

In one embodiment, the positional information includes a track number and a sector number. The record information area corresponds to a Recording Management Area (RMA) in the case of the DVD-R/RW, and a Drive Test Zone (DTZ) in the case of the DVD-RAM, for example. These record information areas are only some examples, and they are not applied to all recording media, as there are various types of recording media and their respective names and positions of areas storing the record information may be different from one another.

When the defect is detected in a predetermined position, while data recording and reproducing operations are carried out, the defect detection unit 140 identifies the position where the defect is detected from a header area of the defect detected sector (S230). The controller 150 then refers to the stored positional information, with respect to the recorded areas and the unrecorded areas, stored in the memory 130, and determines whether the defect detected position corresponds to a recorded area or unrecorded area (S240).

Based on this determination, a predetermined defect compensation method suitable for the corresponding area is employed to perform the defect compensation (S250). In other words, when the defect detected position corresponds to a recorded area, the controller 150 controls the defect compensation unit 160 so as to perform a defect compensation suitable for the recorded area. The defect compensation unit 160 then drives the actuator, under control of the controller 150, to compensate for the defect.

Similarly, when the defect detected position is determined to be in an unrecorded area, the controller 150 controls the defect compensation unit 160 to perform the defect compensation suitable for the unrecorded area.

When it is determined that data is not stored in the loaded disk, in the operation S210), the controller 150 reads out an unrecorded area defect compensation program from the memory 130 and controls the defect compensation unit 160 to perform the corresponding defect compensation (5260).

As mentioned above, according to the embodiments of the present invention, recorded and unrecorded areas of a medium are discriminated in advance, and different respective defect compensation methods, with respect to the recorded and unrecorded areas, are carried out based on this discrimination. As a result, optimal recording and reproducing performances can be implemented all the time, even when the corresponding medium has both recorded and unrecorded areas.

In addition, embodiments of the present invention may be implemented through computer readable code in a medium, with the medium being any data storage device that can store or transmit data which can be thereafter read by a computer system. Examples of the computer readable media include read-only memory (ROM), random-access memory (RAM), CD-ROMs, magnetic tapes, floppy disks, optical data storage devices, wave guides, and carrier waves (such as data transmission through the Internet or wireless networks, for example). The computer readable medium can also be distributed over network coupled computer systems so that the computer readable code can be stored/transmitted and executed in a distributed fashion.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for compensating for a defect in a medium, comprising:
determining a medium recording state by referring to a predetermined information area of the medium;
determining positional information of recorded and unrecorded areas of the medium by referring to a predetermined area of the medium and storing the positional information, based on the determination that the medium includes recorded data;
identifying a position of the medium where a defect is detected, by referring to the stored positional information upon the defect being detected and while data is being recorded and/or reproduced to/from the identified position, and determining whether the identified position is in a recorded area or unrecorded area based on the referenced stored positional information; and
carrying out a corresponding predetermined method for compensating for the defect based on the determination of whether the identified area is a recorded or unrecorded

2. The method of claim 1, wherein the predetermined information area is an R-information area when the medium is a DVD-R or DVD-RW medium, and a lead-in area when the medium is a DVD-RAM medium.

3. The method of claim 1 or claim 2, wherein the predetermined area having the recording information is a recording management area (RMA) when the medium is a DVD-R or DVD-RW medium, and a predetermined drive test zone (DTZ) includes the recording information when the medium is a DVD-RAM medium.

4. The method of any preceding claim, wherein the determining of whether the identified position is a recorded area or unrecorded area, based on the positional information, is performed directly before the corresponding recording and/or reproducing operation to/from the medium is performed.

5. An apparatus for compensating for a defect of a medium, comprising:
a memory (130) having respective defect compensation programs suitable for recorded areas and unrecorded areas;
a medium state determining unit (110) to refer to a predetermined information area of the medium and determining a recording state of the medium;
a positional information determining unit (120) to refer to a predetermined area of the medium, having recording information, and identifying positional information for recorded and unrecorded areas of the medium, and to store the positional information in the memory (130), when the medium state determining unit (110) determines the medium includes recorded data;
a defect detection unit (140) to identify a defect position when the defect is detected while data is recorded and/or reproduced to/from the medium; and
a controller (150) to determine whether the defect position is a recorded area or an unrecorded area, by referring to the positional information, and to carry out a predetermined method for compensating for the defect, based on the determination of whether the identified defect position is in a recorded or unrecorded area.

6. The apparatus of claim 5, wherein the predetermined information area is an R-information area when the medium is a DVD-R or DVD-RW medium, and a lead-in area when the medium is a DVD-RAM medium.

7. The apparatus of claim 5 or claim 6, wherein the predetermined area, having recording information, is a recording management area (RMA) when the medium is a DVD-R or DVD-RW medium, and a predetermined drive test zone (DTZ), having the recording information, when the medium is a DVD-RAM medium.

8. The apparatus of any one of claims 5 to 7, wherein the determining of whether the defect position is a recorded area or an unrecorded area is performed directly before the corresponding recording and/ reproducing to/from the medium is performed.

9. A method for compensating for a defect in a medium, comprising:
identifying a position of a medium where a defect is detected and determining whether the identified position is in a recorded area or unrecorded area based on stored recording/unrecorded positional information for the medium; and
carrying out a predetermined recording area compensating method when the defect position is in a recording area and a predetermined unrecorded area compensating method when the defect position is in an unrecorded area.

10. The method of claim 9, wherein the defect is an inclination of the medium relative to a pickup laser.

11. A recording and/or reproducing method, comprising:
performing the defect compensating method of claim 9 or claim 10; and
irradiating a surface of a medium for recording and/or reproducing to/from the medium.

12. The method of claim 11, further comprising determining a recording state of the medium before the identifying of the position of the medium where the defect is detected, to determine whether data is recorded on the medium, by referring to an R-information area when the medium is a DVD-R or DVD-RW medium, and a lead-in area when the medium is a DVD-RAM medium.

13. The method as recited in claim 11 or claim 12, wherein the stored recording/unrecorded positional information is stored in a recording management area (RMA) when the medium is a DVD-R or DVD-RW medium, and a predetermined drive test zone (DTZ) includes the recording information when the medium is a DVD-RAM medium.

14. A recording and/or reproducing apparatus, comprising:
a defect detection unit (140) to identify a position of a medium where a defect is detected and to determine whether the identified position is in a recorded area or unrecorded area based on stored recording/unrecorded positional information for the medium; and
a controller (150) performing recording and/or reproducing to/from the medium by first carrying out a predetermined recording area compensating method when the defect position is in a recording area and a predetermined unrecorded area compensating method when the defect position is in an unrecorded area.

15. The apparatus of claim 14, wherein the defect is an inclination of the medium relative to a pickup laser.

16. The apparatus of claim 14 or claim 15, further comprising a medium state determining unit (110) to determining a recording state of the medium before the identifying of the position of the medium where the defect is detected, to determine whether data is recorded on the medium, by referring to an R-information area when the medium is a DVD-R or DVD-RW medium, and a lead-in area when the medium is a DVD-RAM medium.

17. The method as recited in any one of claims 14 to 16, wherein the stored recording/unrecorded positional information is stored in a recording management area (RMA) when the medium is a DVD-R or DVD-RW medium, and a predetermined drive test zone (DTZ) includes the recording information when the medium is a DVD-RAM medium.

18. A medium comprising computer readable code controlling a recording and/or reproducing apparatus to perform the method of any one of claims 1 to 4.

19. A medium comprising computer readable code controlling a recording and/or reproducing apparatus to perform the method of any one of claims 9 to 10.

20. A medium comprising computer readable code controlling a recording and/or reproducing apparatus to perform the method of any one of claims 11 to 13.
